# EUROPÄISCHE PATENTANMELDUNG

(11) **EP 3 964 841 A1**
(43) Veröffentlichungstag der Anmeldung: **09.03.2022**
(21) Anmeldenummer: 20194135.8
(22) Anmeldetag: 02.09.2020
(51) Int. Cl.: G01Q 70/00

(54) **MESSAPPARATUR UND VERFAHREN ZUM UNTERSUCHEN EINES BEREICHS EINER OBERFLÄCHE EINES SUBSTRATS MIT HILFE EINER KRAFT-MESSSONDE**

(71) Anmelder: Siltronic AG, 81677 München (DE)
(72) Erfinder: Ehlert, Andreas, 84547 Emmerting (DE)
(74) Vertreter: Staudacher, Wolfgang

(57) **Zusammenfassung**

Messapparatur und Verfahren zum Untersuchen eines Bereichs einer Oberfläche eines Substrats mit Hilfe einer Kraft-Messsonde eines Rasterkraftmikroskops. Das Rasterkraftmikroskop umfasst eine Strahlungsquelle, die zum Reinigen der Kraft-Messsonde und des zu untersuchenden Bereichs der Oberfläche des Substrats ausgelegt ist.

## Beschreibung

Gegenstand der Erfindung ist eine Messapparatur umfassend ein Rasterkraftmikroskop zum Untersuchen eines Bereichs einer Oberfläche eines Substrats mit Hilfe einer Kraft-Messsonde des Rasterkraftmikroskops sowie ein Verfahren zum Untersuchen eines Bereichs einer Oberfläche eines Substrats mittels einer Kraft-Messsonde eines Rasterkraftmikroskops in einer Messapparatur.

### Stand der Technik / Probleme

Bekanntermaßen wird ein Rasterkraftmikroskop (atomic force microscope, AFM) häufig eingesetzt, um mittels einer Kraft-Messsonde die Oberfläche einer Messprobe bis in den atomaren Bereich zu untersuchen. Die Funktionsweise eines Rasterkraftmikroskops ist beispielsweise in US 2019 0 353 681 A1 beschrieben. Der empfindliche Messvorgang ist anfällig für Störungen, insbesondere wenn in kurzen Abständen und über lange Zeiträume hinweg AFM-Messungen durchzuführen sind. Eine Quelle für Störungen entsteht, wenn die Kraft-Messsonde im Verlauf von Messvorgängen mit Fremdmaterial verunreinigt wird. Eine andere Quelle sind Verunreinigungen, die sich in dem Bereich der Messprobe befinden, der mittels der Kraft-Messsonde untersucht werden soll.

In DE 103 39 745 A1 wird vorgeschlagen die Kraft-Messsonde zu reinigen, indem der Bereich der Sonde auf eine Temperatur aufgeheizt wird, bei der sich Verunreinigungen verflüchtigen. EP 3 251 760 A1 enthält einen ähnlichen Vorschlag.

Schichten aus Siliziumdioxid können von Oberflächen aus Silizium durch Bestrahlen mit Laserlicht entfernt werden (Magyar et al., Silicon dioxide thin film removal using high-power nanosecond lasers, Applied Surface Science 207 (2003) 306-313).

Aufgabe der vorliegenden Erfindung ist es, ein weitgehend störungsfreies und effizientes kontinuierliches Betreiben von AFM-Messungen zu gewährleisten.

Die Aufgabe der Erfindung wird gelöst durch eine Messapparatur umfassend ein Rasterkraftmikroskop zum Untersuchen eines Bereichs einer Oberfläche eines Substrats mit Hilfe einer Kraft-Messsonde, gekennzeichnet durch eine Strahlungsquelle, die zum Reinigen der Kraft-Messsonde und des zu untersuchenden Bereichs der Oberfläche des Substrats ausgelegt ist.

Darüber hinaus ist Gegenstand der Erfindung auch ein Verfahren zum Untersuchen eines Bereichs einer Oberfläche eines Substrats mittels einer Kraft-Messsonde eines Rasterkraftmikroskops in einer Messapparatur, umfassend
das Ablegen des Substrats auf einem Probenhalter;
das Reinigen des Bereichs der Oberfläche des Substrats durch Bestrahlen mittels einer Strahlungsquelle;
das Reinigen der Kraft-Messsonde durch Bestrahlen mittels der Strahlungsquelle; und
das Messen der Topografie des Bereichs der Oberfläche des Substrats mittels der Kraft-Messsonde.

Die Erfindung ermöglicht insbesondere die Bestimmung der Oberflächenrauheit von Substraten aus Halbleitermaterial mittels kontinuierlich störungsfrei (zeitlich stabil) ablaufender AFM-Messungen. Insbesondere entfällt bei Anwendung der Erfindung, dass das Substrat von einer Vorkammer über eine Probenschleuse in die Messkammer eingeführt werden muss. Darüber muss das Substrat nicht vollständig aufgeheizt werden und dementsprechend entfällt die Wartezeit, die dann bis zur Abkühlung des Substrats auf Messtemperatur in Kauf genommen werden müsste.

Die Messapparatur ist von einem Gehäuse umgeben, in dem während des Betriebs der Druck der Umgebung, also Normaldruck herrscht. Die Strahlungsquelle zum Reinigen der Kraft-Messsonde und des Bereichs der Oberfläche des Substrats ist als zusätzliche Einheit permanent in der Messapparatur untergebracht und ausgelegt, die Kraft-Messsonde oder den Bereich der Oberfläche des Substrats oder beide gleichzeitig zu bestrahlen. Mit dem Bestrahlen ist ein lokaler temporärer Temperaturanstieg verknüpft, der im Wesentlichen auf die bestrahlten Objekte und deren nähere Umgebung beschränkt ist. Deswegen kann auf das Aufheizen des gesamten Substrats verzichtet werden und eine damit verbundene, vergleichsweise lange Wartezeit bis zum Abkühlen des Substrats auf Messtemperatur vermieden werden.

Die Messapparatur verfügt über einen Probenhalter, auf dem das Substrat als Probe für die AFM-Messung abgelegt wird. Das Substrat hat vorzugsweise eine flächige Form wie Halbleiterscheiben. Der Bereich der Größe der Fläche ist nach unten nahezu nicht begrenzt, nach oben sind Flächen von Halbleiterscheiben bis zu einem Durchmesser von 450 mm vorgesehen. Gemäß einer bevorzugten Ausführungsform der Erfindung ist das Substrat eine Halbleiterscheibe, die im Wesentlichen aus einkristallinem Silizium besteht oder ein Teil einer solchen Halbleiterscheibe.

Die Kraft-Messsonde besteht vorzugsweise im Wesentlichen aus Silizium oder Diamant.

Da Silizium in der Regel von einer dünnen Schicht aus nativem Oxid (native oxide) bedeckt ist oder als Folge von Prozess-Schritten im Zuge der Fertigung von Halbleiter-Bauelementen eine thermisch aufgewachsene Oxidschicht oder Oxynitrid-Schicht tragen kann, wird erfindungsgemäß vorgeschlagen, eine derartige Schicht und gegebenenfalls andere Verunreinigungen wie anorganische und organische Fremdpartikel und Wasser unmittelbar vor der Untersuchung des Substrats mittels AFM-Messung durch Bestrahlen zu entfernen.

Als Strahlungsquelle kommen Quellen in Frage, die elektromagnetische Strahlung aussenden, mit der das Substrat im Bereich, wo die AFM-Messung stattfinden soll, auf mindestens 40 °C erhitzt wird, beispielsweise Laserlicht, Lampen im sichtbaren Wellenbereich, IR-Lampen, UV-Lampen, Elektronenquellen und Röntgenquellen. Gemäß einer bevorzugten Ausführungsform der Erfindung ist eine Lasereinrichtung als Strahlungsquelle vorgesehen, vorzugsweise eine Lasereinrichtung, die einen gepulsten Laser umfasst. Die Leistung des Lasers ist vorzugsweise bis zu einer Energiedichte von mindestens 320 mJ/cm⁻² regelbar, ebenso wie der zeitliche Abstand zwischen zwei Pulsen einer Pulsfolge, die Dauer eines Pulses und die Dauer zwischen zwei Pulsfolgen. Geeignet ist beispielsweise ein Laser, der dem von Magyar et al. verwendeten Nd:YAG Laser gleicht und mit dem das Substrat mit Licht einer Wellenlänge von 532 nm oder 355 nm bestrahlt wird. Grundsätzlich ist aber jeder Laser-Typ geeignet, mit dem das Substrat bis auf eine Temperatur nahe dem Schmelzpunkt von Silizium erhitzt werden kann, beispielsweise gepulste XeCl-, KrF- oder ArF-Laser.

Die AFM-Messung des zu untersuchenden Bereichs der Oberfläche des Substrats findet zwischen zwei Pulsen oder zwei Pulsfolgen statt. Vorzugsweise sind die Aktivitäten der Lasereinrichtung und des Rasterkraftmikroskops entsprechend automatisiert und synchronisiert.

Das erfindungsgemäße Verfahren umfasst auch das Reinigen der Kraft-Messsonde durch Bestrahlen mittels der Strahlungsquelle, beispielsweise der Lasereinrichtung, entweder in regelmäßigen Abständen oder vor jeder AFM-Messung oder nachdem das Messsignal der AFM-Messung eine Verunreinigung der Kraft-Messsonde angezeigt hat.

Gemäß einer Ausgestaltung der Erfindung ist vorgesehen, das Ergebnis der Reinigung des Bereichs der Oberfläche des Substrats vor der AFM-Messung mittels einer Kontrollsonde zu überprüfen und nötigenfalls die Reinigungsmaßnahme zu wiederholen. Als Kontrollsonde wird vorzugsweise ein berührungslos arbeitende Kelvin-Sonde eingesetzt, die beispielsweise mittels eines Kalibrier-Standards aus Gold oder Graphen kalibriert ist.

Eine bevorzugte Ausführungsform der Erfindung wird nachfolgend mit Bezugnahme auf eine Zeichnung beschrieben.

### Kurzbeschreibung der Figuren

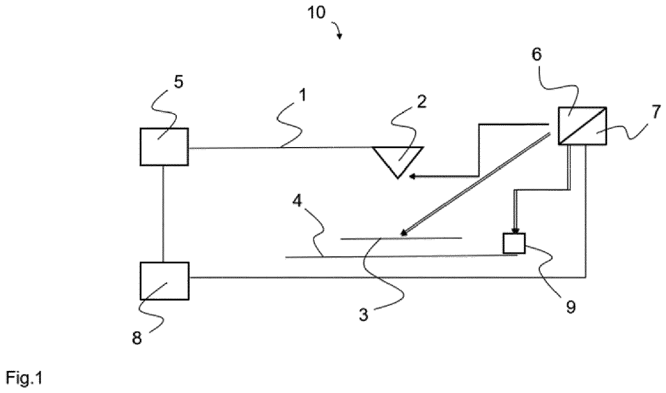

Fig. 1 zeigt schematisch Bestandteile der Messapparatur, die zum Verständnis der Erfindung beitragen.

### Liste der verwendeten Bezugszeichen

- **1**: Blattfeder
- **2**: Kraft-Messsonde
- **3**: Substrat
- **4**: Probenhalter
- **5**: Antriebseinrichtung
- **6**: Strahlungsquelle
- **7**: Kontrollsonde
- **8**: Steuerungseinheit
- **9**: Kalibrier-Standard
- **10**: Messapparatur

### Beschreibung eines erfindungsgemäßen Ausführungsbeispiels

Fig. 1 zeigt Merkmale einer erfindungsgemäßen Messapparatur 10, wobei auf die Darstellung eines die Messapparatur umgebenden Gehäuses verzichtet wurde. Die Messapparatur 10 umfasst ein Rasterkraftmikroskop mit typischen Merkmalen wie einer Blattfeder 1 (cantilever), die an einem Ende eine Kraft-Messsonde 2 trägt, mit deren Hilfe die Oberfläche eines Substrats 3 untersucht wird, das auf einem Probenhalter 4 abgelegt ist. Eine Steuerungseinheit 8 veranlasst die Bewegung der Kraft-Messsonde 2 über das Substrat 3 mittels einer Antriebseinrichtung 5.

Erfindungsgemäß ist als Bestandteil der Messapparatur 10 eine Strahlungsquelle 6 vorgesehen, mit der wahlweise die Kraft-Messsonde 2 und der Bereich der Oberfläche des Substrats 3, der der AFM-Messung unterzogen zu werden beabsichtigt ist, gereinigt werden. Die Kraft-Messsonde wird vorzugsweise gereinigt, wenn das AFM-Messsignal eine Verschmutzung der Kraft-Messsonde 2 vermuten lässt, der mittels AFM-Messung zu untersuchende Bereich der Oberfläche des Substrats 3 wird vorzugsweise unmittelbar vor der AFM-Messung gereinigt.

Vorzugsweise ist eine Kontrollsonde 7, die mittels eines Kalibrier-Standards 9 kalibriert ist, ebenfalls Bestandteil der Messapparatur 10. Mittels der Kontrollsonde 9 wird das Ergebnis der Reinigung des zu untersuchenden Bereichs der Oberfläche des Substrats 3 geprüft und die Reinigungsmaßnahme nötigenfalls wiederholt, bevor die AFM-Messung durchgeführt wird.

## Patentansprüche

1. Messapparatur umfassend ein Rasterkraftmikroskop zum Untersuchen eines Bereichs einer Oberfläche eines Substrats mit Hilfe einer Kraft-Messsonde, **gekennzeichnet durch** eine Strahlungsquelle, die zum Reinigen der Kraft-Messsonde und des zu untersuchenden Bereichs der Oberfläche des Substrats ausgelegt ist.

2. Messapparatur nach Anspruch 1, **gekennzeichnet durch** eine Lasereinrichtung als Strahlungsquelle.

3. Messapparatur nach Anspruch 1 oder Anspruch 2, **gekennzeichnet durch** eine Kontrollsonde zum Überprüfen des Ergebnisses einer Reinigung mittels der Strahlungsquelle.

4. Messapparatur nach Anspruch 3, **gekennzeichnet durch** eine Kelvin-Sonde als Kontrollsonde.

5. Verfahren zum Untersuchen eines Bereichs einer Oberfläche eines Substrats mittels einer Kraft-Messsonde eines Rasterkraftmikroskops in einer Messapparatur, umfassend
das Ablegen des Substrats auf einem Probenhalter;
das Reinigen des Bereichs der Oberfläche des Substrats durch Bestrahlen mittels einer Strahlungsquelle;
das Reinigen der Kraft-Messsonde durch Bestrahlen mittels der Strahlungsquelle; und
das Messen der Topografie des Bereichs der Oberfläche des Substrats mittels der Kraft-Messsonde.

6. Verfahren nach Anspruch 5, **gekennzeichnet durch** das Reinigen des Bereichs unmittelbar vor dem Messen der Topografie des Bereichs.

7. Verfahren nach Anspruch 5 oder Anspruch 6, **gekennzeichnet durch** das Überprüfen des Ergebnisses der Reinigung des Bereichs der Oberfläche des Substrats mittels einer Kontrollsonde.
